# EUROPEAN PATENT APPLICATION

(11) **EP 1 900 683 A1**
(43) Date of publication of application: **19.03.2008**
(21) Application number: 06766837.6
(22) Date of filing: 16.06.2006
(51) Int. Cl.: C01B 21/083

(54) **PROCESS FOR SYNTHESIS OF HALOGENATED NITROGEN**

(30) Priority: 06.07.2005 JP 2005197436; 08.08.2005 JP 2005229584; 17.04.2006 JP 2006113720; 01.06.2006 JP 2006153015
(71) Applicant: CENTRAL GLASS COMPANY, LIMITED, Ube-shi, Yamaguchi-ken 755-0001 (JP)
(72) Inventor: MORI, Isamu, Ube-shi, Yamaguchi 755-0001 (JP); MIYAZAKI, Tatsuo, Ube-shi, Yamaguchi 755-0001 (JP)
(74) Representative: Manitz, Finsterwald & Partner GbR
(86) International application number: PCT/JP2006/312149
(87) International publication number: WO 2007/004409

(57) **Abstract**

A process for synthesizing a halogenated nitrogen represented by a formula of NFₓL₃₋ₓ, where L represents a halogen other than fluorine, and 1≤x≤3 is provided. This process includes the step of (a) reacting an ammonium complex compound that is one selected from the group consisting of NH₄F·nHF, (NH₄)_{y}MF_{z}·mHF and a mixture of these and that is in liquid form, with an interhalogen compound or a mixture of an interhalogen compound and F₂ gas, wherein 1<n, 1≤y≤4, 2≤z≤8, 0.1≤m, and M represents one selected from the group consisting of elements of group 1 to group 16 of periodic table and a mixed element of these elements.

## Description

### TECHNICAL FIELD

The present invention relates to processes for synthesizing NF₃, which is useful for interior washing of semiconductor production apparatuses such as CVD apparatuses, and halogenated nitrogens, which are useful as a raw material for synthesizing difluoroaminoalkanes from lower normal alkyl mercury compounds.

### BACKGROUND OF THE INVENTION

Hitherto, there has been a report by A. V. PANKRATOV et al. that NF₂Cl and NFCl₂ are produced from NH₄Cl and F₂, as a process for producing halogenated nitrogens (Non-patent Publication 1). With respect to the synthesis of NF₂Cl and NF₃ using interhalogen, there are a process in which solid NH₄F is reacted with ClF₃ diluted to 35% or lower by N₂ and the like at from -40°C to room temperature (Patent Publication 1), and a process in which solid NH₄F or solid NH₄HF₂ is dispersed in a fluorocarbon oil, and it is reacted with ClF₃ in a temperature range of 50-75°C (Patent Publication 2), and the like. The former process is a solid-gas reaction, and has a problem that the control of the reaction and the continuous synthesis are difficult. The latter process had a danger that the fluorocarbon oil reacts with ClF₃ by the generation of a local reaction heat to cause explosion and had a fear of the contamination of the produced NF₂Cl with the carbon oil mist and vapor to lower purity. It is known that NF₂Cl is produced by a reaction of HNF₂ with ClF₃ and that NF₃ is produced by a reaction of ClF₅ with HNF₂ (Non-patent Publication 2). These processes have a problem that the synthesis of HNF₂ itself is difficult.

Furthermore, halogenated nitrogen compounds, such as NFCl, NF₂Br and NFBr₂, are also known (Non-patent Publication 3, Non-patent Publication 4, and Non-patent Publication 5).

As processes for producing NF₃, which is one of halogenated nitrogens, there are known (a) a process in which gaseous F₂ is blown into a HF-adduct of a liquid acidic ammonium fluoride or ammonium complex compound (Patent Publication 3 and Patent Publication 4), (b) a process by electrolysis of a HF solution of acidic ammonium fluoride (Patent Publication 5), (c) a process in which gaseous NH₃ is reacted with gaseous F₂ (Patent Publication 6), (d) a process by glow discharge of a gaseous mixture of N₂ and F₂ (Patent Publication 7), (e) a process by a gas-phase reaction between FN₃ and NOF or ClF₃ (Patent Publication 8), (f) a process by a reaction between solid (NH₄)₃AlF₆ and F₂ (Patent Publication 9).

In the process (a), however, it is necessary to conduct a liquid stirring with a high-energy power in order to increase the efficiency of the contact between gaseous F₂ and the liquid. Thus, there has been a problem that the structure of the reactor becomes mechanically complicated and that a large energy is necessary. Furthermore, there has been a problem that the generation of reaction heat is great, that the size increase of the apparatus is difficult, and that the temperature range for making the synthesis possible is narrow. The electrolysis process (b) has a problem that a large amount of electric energy is necessary and that a danger of explosion exists due to the generation of sludge through dissolution of Ni electrode and due to the mixing of H₂ and NF₃. The process (c) is accompanied with a danger of explosion. The process (d) is not a preferable process, since yield is low. The processes (e) and (f) are cumbersome and difficult, since it is necessary to synthesize FN₃ and (NH₄)₃AlF₆ themselves.
Patent Publication 1: US Patent No. 3084025 specification
Patent Publication 2: US Patent No. 3314770 specification
Patent Publication 3: Japanese Patent Examined Publication 55-8326
Patent Publication 4: Japanese Patent Unexamined Publication 9-221307
Patent Publication 5: Japanese Patent Examined Publication 47-16418
Patent Publication 6: Japanese Patent Unexamined Publication 02-255513
Patent Publication 7: US Patent No. 3304248 specification
Patent Publication 8: US Patent No. 4001380 specification
Patent Publication 9: Japanese Patent Unexamined Publication 60-71503
Non-patent Publication 1: 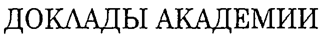 HAYK CCCP, Vol. 182, No. 1 (1968)
Non-patent Publication 2: Pilipovich, Donald, Schack, Carl J., Inorganic Chem., 7(2), 386-7, (1968)
Non-patent Publication 3: EXTON, D. B., Williams S. A., et al., J. Phys. Chem., 1993
Non-patent Publication 4: Edward W. L. and Ivan C. S., Inorganic High-Energy Oxidizers, MARCEL DEKKER, INC., New York, p86 (1968)
Non-patent Publication 5: Edward W. L. and Ivan C. S., Inorganic High-Energy Oxidizers, MARCEL DEKKER, INC., New York, p89 (1968)

### SUMMARY OF THE INVENTION

It is an object of the present invention to provide a process for industrially synthesizing halogenated nitrogen compounds with safety and easiness.

As a result of an eager examination, the present inventors have found that a halogenated nitrogen is obtained with good yield by reacting an ammonium complex compound that is one selected from the group consisting of an acidic ammonium fluoride (NH₄F·nHF, 1<n), an acidic fluoroammonium complex ((NH₄)_{y}MF_{z}-mHF, 1≤y≤4, 2≤z≤8, 0.1≤m) and a mixture of these and that is in liquid form, with an interhalogen compound or a mixture of the interhalogen compound and F₂ gas, thereby reaching the present invention.

According to the present invention, a process for synthesizing a halogenated nitrogen represented by a formula of NFₓL₃₋ₓ (L represents a halogen other than fluorine, and 1≤x≤3) is provided. This process comprises the step of (a) reacting an ammonium complex compound that is one selected from the group consisting of NH₄F·nHF, (NH4)_{y}MF_{z}·mHF and a mixture of these and that is in liquid form, with an interhalogen compound or a mixture of an interhalogen compound and F₂ gas, wherein 1<n, 1≤y≤4, 2≤z≤8, 0.1≤m, and M represents one selected from the group consisting of elements of group 1 to group 16 of periodic table and a mixed element of these elements.

### DETAILED DESCRIPTION

In the following, the present invention is described in detail.
In the present invention, when an interhalogen compound is reacted with a molten salt of HF adduct of the ammonium salt or fluoroammonium complex salt or a HF solution of the ammonium salt or fluoroammonium complex salt, the interhalogen compound is utilized by almost 100%, and a halogenated nitrogen NFₓL₃₋ₓ (L = halogen) is produced. A reaction of the produced halogenated nitrogen gas with F₂ or HF produces NF₃ and an interhalogen compound. Furthermore, the produced interhalogen compound can be reused in the above reaction step.

In the present invention, an acidic ammonium fluoride (NH₄F·nHF) in liquid form is used as a raw material. Although 1<n, preferably 2.0≤n≤20. An acidic fluoroammonium complex ((NH4)_{y}MF_{z}·mHF), which is another raw material, is used. Here, y, z and m are numbers in ranges of 1≤y≤4, 2≤z≤8, and 0.1≤m. M represents one selected from the group consisting of elements of group 1 to group 16 of periodic table and a mixed element of these elements.
Specifically, M is Al, Be, Cd, Ce, Cr, Co, Cu, Ga, Ge, Ho, In, Fe, Pb, Mn, Nb, Ni, P, Sb, Si, Sn, Th, Ti, V, Zn, Zr, W, Mg, Li, K, or Na. As compounds using these, it is possible to cite (NH₄)₃AlF₆, NH4AlF₄, NH₄MgAlF₆, NH₄BeF₄, NH₄LiBeF₄, NH₄NaBeF₄, NH₄CdF₃, NH₄CeF₅, (NH₄)₄CeF₈, (NH₄)₂CeF₆, (NH₄)₄CeF₇, (NH₄)₃CrF₆, NH₄CrF₆, NH₄CrF₃, (NH₄)₂CoF₄, (NH₄)₂CoF₆, NH₄CoF₃, NH₄CuF₃, (NH₄)₂CuF₄, (NH₄)₃CuF₆, (NH₄)₃GaF₆, (NH₄)₂GaF₅, NH₄GaF₄, (NH₄)₂GeF₆, (NH₄)₃GeF₇, NH₄HoF, (NH₄)₂In₃F₆, (NH₄)₃FeF₆, NH₄Fe₂F₆, NH₄FeF₄, (NH₄)₂NaFeF₆, (NH₄)₂KFeF₆, (NH₄)₂PbF₆, NH₄MnF₃, (NH₄)₃MnF₆, NH₄NbF₆, (NH₄)₂NiF₄, NH₄NiF₃, NH₄PF₆, NH₄SbF₆, NH₄SbF₄, NH₄Sb₂F₇, (NH₄)₂SiF₆, (NH₄)₃SiF₇, NH₄LiSiF₆, (NH₄)₂SnF₆, (NH₄)₄ThF₈, (NH₄)₃ThF₇, (NH₄)₃TiF₆, (NH₄)₃TiF₇, (NH₄)₃VF₆, NH₄ZnF₃, (NH₄)₂ZnF₄, (NH₄)₃ZrF₇, NH₄ZrF₅, (NH₄)₂ZrF₆, NH₄WF₇, and the like. It is possible to use a mixture of these. Of these compounds, particularly preferable ones are (NH₄)₃AlF₆, NH₄AlF₄, NH₄CuF₃, (NH₄)₂CuF₄, (NH₄)₃CuF₆, (NH₄)₃FeF₆, NH₄Fe₂F₆, NH₄FeF₄, (NH₄)₂NiF₄, NH₄NiF₃, and (NH₄)₂SiF₆.

In the synthesis process of the present invention, it is optional to add an alkali metal fluoride or alkali-earth metal fluoride in order to lower volatility of a molten salt of HF adduct of the ammonium salt or fluoroammonium complex salt or a HF solution of the ammonium salt or fluoroammonium complex salt. In order to regenerate the ammonium salt or fluoroammonium complex salt, it can be accomplished by introducing NH₃, a mixed gas or mixed liquid of NH₃ and HF, or NH₄F into the reactor with the synthesis process of the halogenated nitrogen.

As the interhalogen compound used in the present invention, it is possible to cite ClF₅, ClF₃, ClF, BrF₅, BrF₃, BrF, IF₇, IF₅, IF₃, IF and the like. In particular, ClF₃, BrF₅, BrF₃, IF₇, IF₅, and IF₃ are preferable.

It is possible to cite LiF, NaF, KF, RbF, CsF, FrF₂ and the like as the alkali metal fluoride, which is used in the present invention, for lowering volatility of a molten salt of HF adduct of the ammonium salt or fluoroammonium complex salt or a HF solution of the ammonium salt or fluoroammonium complex salt. As the alkali-earth metal fluoride, it is possible to cite BeF₂, MgF₂, CaF₂, SrF₂, BaF₂, RaF₂, and the like. In particular, LiF, NaF, KF, RbF, CsF, MgF₂, CaF₂, BaF₂, and the like are preferable.

As the reaction process, it is possible to select a process in which the reaction is conducted by supplying an interhalogen compound in gaseous form or liquid form to a molten salt or HF solution of the ammonium salt or fluoroammonium complex salt previously put into the reactor, a process in which a molten salt or HF solution of HF adduct of the ammonium salt or fluoroammonium complex salt is added in a dropwise manner to a HF solution of an interhalogen compound solution, or a process in which their solids themselves are added.

One of great advantages of this process is that the reaction temperature range is wide. For example, in a reaction of an acidic ammonium fluoride molten salt with F₂, only a relatively narrow temperature of 120°C to 200°C makes it possible to synthesize a halogenated nitrogen (nitrogen trifluoride). However, the process of the present invention makes the synthesis possible in the after-mentioned wide range.

In the case of introducing an interhalogen compound into a HF adduct of a liquid ammonium salt or fluoroammonium complex salt, it suffices that the lower limit of the reaction temperature is not lower than a higher one of melting point of the HF adduct of the liquid ammonium salt or fluoroammonium complex salt and that of the interhalogen compound. In the case of introducing a HF adduct of a solid or liquid ammonium salt or fluoroammonium complex salt into a liquid interhalogen compound or its HF solution, it suffices to have a temperature, at which the interhalogen compound or the HF solution of the ammonium salt does not solidify, or higher. The upper limit of the reaction temperature is preferably not higher than 250°C. Exceeding 250°C is not preferable, since corrosion of the apparatus material is vigorous. The range of the reaction temperature is as above. More preferably, it is from 0°C to 200°C.

In the case of conducting the synthesis by a reaction between a HF adduct of the fluoroammonium complex salt and an interhalogen compound, a temperature of 20°C to 250°C is preferable, more preferably from 50°C to 200°C. If the temperature is low, the reaction does almost not proceed. If the temperature is high, the generation rate of N₂ becomes high. Therefore, they are not preferable.

The pressure for the reaction may suitably be set in view of vapor pressures of the ammonium salt and the fluoroammonium complex salt.

A halogen other than fluorine of the interhalogen compound is formed mostly as chlorine, bromine, iodine, or nitrogen halide. Therefore, it can be regenerated into a fluorine-containing, interhalogen compound by reacting a gas discharged from the reactor with F₂. Thus, it can be reused as a synthesis raw material.

Next, the regeneration of NH₄F·nHF or (NH₄)_{y}MF_{z}·mHF can be conducted by introducing NH₃, while reacting an ammonium complex compound selected from the group consisting of NH₄F·nHF, (NH₄)_{y}MF_{z}·mHF and a mixture of these with an interhalogen compound. Specifically, a HF solution, in which NH₄AlF₄ is dispersed, remains in a solution, in which NF₂Cl and NF₃ have been generated by the reaction between (NH₄)₃AlF₆ and ClF₃. Blowing NH₃ therein regenerates (NH₄)₃AlF₆. In the regeneration, according to need, it is optional to allow HF to flow at the same time, and it is optional to introduce NH₄F and NH₄F·nHF, which have previously been synthesized.

The process of the present invention makes it possible to easily produce with low price NF₃, which is a cleaning gas useful for interior washing of semiconductor production apparatuses such as CVD apparatuses, and halogenated nitrogens, which are useful as a raw material for synthesizing difluoroaminoalkanes from lower normal alkyl mercury compounds.

In the following, the present invention is described in detail by examples. The present invention is, however, not limited to such examples.

### COMPARATIVE EXAMPLES 1-3

(NH₄)₃AlF₆·6HF in the form of liquid was put into a stainless steel container, and 100% F₂ was bubbled under the following conditions with stirring. The discharged gas was passed through a cooling trap (0°C), and then it was analyzed by FT-IR, UV and gas chromatography. With this, the generation of a trace amount of NF₃ was found, but most of it was the unreacted F₂ (Table 1). HF is excluded from the concentrations in Table 1. The reason is that the HF concentration increase by volatilization of the molten salt and the conveyance of the gas flow result in no mass balance.

[Conditions] stainless steel container: φ55mm×H220mm, 500ml (NH₄)₃AlF₆·6HF: 162g
3cm immersion from the gas-blowing nozzle
Pressure in the container: 93.3kPa
Reaction temperatures: 60°C, 100°C and 120°C

**[Table 1]**

| | Temp. (°C) | F₂ Flow Rate (SCCM) | NF₃ Conc. (%) | F₂ Conc. (%) |
|---|---|---|---|---|
| Com. Ex. 1 | 60 | 20 | ND | 100% |
| Com. Ex. 2 | 100 | 20 | 0.07 | 99.93% |
| Com. Ex. 3 | 120 | 20 | 0.8 | 99.2 |

### COMPARATIVE EXAMPLES 4-6

NH₄F·2.5HF in the form of liquid was put into a stainless steel container, and 100% F₂ was bubbled under the following conditions with stirring. The discharged gas was passed through a cooling trap (0°C), and then it was analyzed by FT-IR, UV and gas chromatography. With this, the generation of a trace amount of NF₃ was found, but most of it was the unreacted F₂ (Table 2). HF is excluded from the concentrations in Table 2. The reason is that the HF concentration increase by volatilization of the molten salt, the conveyance of the gas flow, and conducting the synthesis without additionally charging the liquid layer with NH₃ result in change over time of the concentration of the volatilizing HF and thereby no mass balance.

[Conditions] stainless steel container: φ55mm×H220mm, 500ml NH₄·2.5HF: 120g
3cm immersion from the gas-blowing nozzle
Pressure in the container: 93.3kPa
Reaction temperatures: 60°C, 100°C and 120°C

**[Table 2]**

| | Temp. (°C) | F₂ Flow Rate (SCCM) | NF₃ Conc. (%) | F₂ Conc. (%) |
|---|---|---|---|---|
| Com. Ex. 1 | 60 | 20 | ND | 100% |
| Com. Ex. 2 | 100 | 20 | 0.02 | 99.98% |
| Com. Ex. 3 | 120 | 20 | 1.5 | 98.5 |

### EXAMPLES 1-6

(NH₄)₃AlF₆·6HF in the form of liquid was put into a stainless steel container, and 100% ClF₃ was bubbled under the following conditions with stirring. The discharged gas was analyzed by FT-IR, UV and gas chromatography (Table 3). As a result, it was found that ClF₃ reacted by 85% even at 0°C, and that halogenated nitrogens, such as NF₂Cl and NF₃, were obtained. HF is excluded from the concentrations in Table 3. The reason is that the HF concentration increase by volatilization of the molten salt and the conveyance of the gas flow result in no mass balance. Besides HF and substances in Table 3, HCl and Cl₂ are generated.

[Conditions] stainless steel container: φ55mm×H220mm, 500ml (NH₄)₃AlF₆·6HF: 162g
3cm immersion from the gas-blowing nozzle
Pressure in the container: 93.3kPa
Reaction temperatures: 0°C, 20°C, 60°C, 100°C, 120°C and 150°C

**[Table 3]**

| | Temp. (°C) | ClF₃ Flow Rate (SCCM) | NF₃ Conc. (%) | NF₂Cl Conc. (%) | ClF₃ Conc. (%) | ClF Conc. (%) | N₂ Conc. (%) |
|---|---|---|---|---|---|---|---|
| Ex. 1 | 0 | 20 | ND | 66 | 15 | Trace | 19 |
| Ex. 2 | 20 | 20 | ND | 61 | 5 | Trace | 34 |
| Ex. 3 | 60 | 20 | 1 | 60 | 1 | Trace | 38 |
| Ex. 4 | 100 | 20 | 6 | 59 | Trace | Trace | 35 |
| Ex. 5 | 120 | 20 | 4 | 60 | Trace | Trace | 36 |
| Ex. 6 | 150 | 20 | 5 | 53 | Trace | Trace | 42 |

### EXAMPLES 7-13

NH₄F·2.5HF in the form of liquid was put into a stainless steel container, and 100% ClF₃ was bubbled under the following conditions with stirring. The discharged gas was analyzed by FT-IR, UV and gas chromatography (Table 4). As a result, it was found that halogenated nitrogens, such as NF₂Cl, NFCl₂ and NF₃, were obtained. HF is excluded from the concentrations in Table 4. The reason is that the HF concentration increase by volatilization of the molten salt and the conveyance of the gas flow result in no mass balance. Besides HF and substances in Table 4, HCl and Cl₂ are generated. Similar results were obtained even in case that ClF₃ was diluted to 20% by using Ar as a diluting gas.

[Conditions] stainless steel container: φ55mm×H220mm, 500ml NH₄F·2.5HF: 120g
3cm immersion from the gas-blowing nozzle
Pressure in the container: 93.3kPa
Reaction temperatures: -15°C, 0°C, 20°C, 60°C, 100°C, 120°C and 150°C

**[Table 4]**

| | Temp. (°C) | ClF₃ Flow Rate (SCCM) | NF₃ Conc. (%) | NF₂Cl Conc. (%) | NFCl₂ Conc. (%) | ClF₃ Conc. (%) | ClF Conc. (%) | N₂ Conc. (%) |
|---|---|---|---|---|---|---|---|---|
| Ex. 7 | -15 | 20 | ND | 60 | ND | 25 | 15 | ND |
| Ex. 8 | 0 | 20 | ND | 77 | ND | 15 | 8 | Trace |
| Ex. 9 | 20 | 20 | ND | 92.4 | ND | 5 | 2 | 0.6 |
| Ex.10 | 60 | 20 | 4 | 41 | 45 | ND | 8 | 2 |
| Ex.11 | 100 | 20 | 13 | 34 | 12 | ND | 9 | 28 |
| Ex. 12 | 120 | 20 | 15 | 49 | ND | ND | Trace | 36 |
| Ex. 13 | 150 | 20 | 18 | 29 | ND | ND | Trace | 53 |

### EXAMPLE 14

NOH₄F·2.5HF in the form of liquid was put into a stainless steel container, the temperature was increased to 100°C, and 1% ClF₃ (He diluting gas) was bubbled under the following conditions with stirring. The discharged gas was analyzed by FT-IR, UV and gas chromatography. As a result, NF₃ was obtained with a yield of 85% (based on ClF₃).

[Conditions] stainless steel container: φ55mm×H220mm, 500ml NH₄F·2.5HF: 120g
3cm immersion from the gas-blowing nozzle
Pressure in the container: 93.3kPa

### EXAMPLE 15

A gas obtained by an experiment similar to Example 3 was passed through a NaF tube, thereby lowering HF to 100ppm or lower. Then, an FT-IR analysis was conducted, while F₂ was mixed by 100 SCCM in a stainless steel tube (1/2 inch φ × 500mmL) heated at 100°C. As a result, NF₂Cl disappeared, and NF₃ and ClF₃ were obtained. Even when the heating temperature was increased to 300°C, NF₃ and ClF₃ were obtained. Furthermore, when the heated gas was passed through a trap cooled to -78°C with refrigerant, ClF₃ was obtained in the trap, and it was possible to pass NF₃ through the trap. The collected ClF₃ was reused in the synthesis.

### EXAMPLE 16

A stainless steel container used in Example 14 was charged with 300CC (mixing ratio ClF₃:HF = 1:10) of a HF solution of ClF₃, and NH₄F·10HF in the form of liquid was added in a dropwise manner at 0°C with stirring. With this, NF₃ and NF₂Cl were obtained at a ratio of 1:2. The generation rate of N₂ was 30% of the total. Similar results were obtained even by using BrF₅, BrF₃, IF₇, IF₅ and IF₃ in place of ClF₃.

### EXAMPLE 17

A stainless steel container used in Example 14 was charged with a NH₄F·2HF solution (300CC), and ClF₃ and F₂ were blown by mixing of 20 SCCM and 10 SCCM at 60°C with stirring. With this, NF₂Cl was almost not obtained, but NF₃ was obtained. The generation rate of N₂ upon this was 5% of the total.

### EXAMPLE 18

A stainless steel container was charged with NH₄F·2.5HF in the form of liquid, 10% ClF₃ diluted with NF₃ was bubbled, and at the same time NH₃ diluted to 10% was bubbled from a tube that was different from the tube, from which ClF₃ was bubbled. The discharged gas was analyzed by FT-IR, UV and gas chromatography. As a result, NF₃ and Cl₂ were obtained.

[Conditions] stainless steel container: φ55mm×H220mm, 500ml NH₄F·2.5HF: 120g
3cm immersion from the gas-blowing nozzle
Pressure in the container: 93.3kPa
Reaction temperature: 125°C
ClF₃ flow rate: 12 SCCM
NH₃ flow rate: 4 SCCM

### EXAMPLE 19

ClF₃ was blown into NH₄F·2.5HF in the liquid form under the following conditions. A gas discharged from the reactor was analyzed by FT-IR and UV. With this, it was found to be a gas in which NF₂Cl, NFCl₂, HF, ClF and Cl₂ were mixed together. This gas together with F₂(100 SCCM) was introduced into a Ni tube heated at 100°C. By analysis of a gas discharged from the Ni tube, it was found that NF₂Cl and NFCl₂ disappeared and NF₃ was generated. A similar result was obtained even by replacing the acidic ammonium fluoride by (NH₄)₃AlF₆.6HF.

[Conditions] stainless steel container: φ55mm×H220mm, 500ml NH₄F 2.5HF: 240g
6cm immersion from the gas-blowing nozzle
Pressure in the container: 93.3kPa
Reaction temperature: 40°C (The gas introduction was started at room temperature. The temperature increased to 40°C by its own heat and stabilized.)
ClF₃ flow rate: 50 SCCM

## Claims

1. A process for synthesizing a halogenated nitrogen represented by a formula of NFₓL₃₋ₓ, where L represents a halogen other than fluorine, and 1≤x≤3, the process comprising the step of:
(a) reacting an ammonium complex compound that is one selected from the group consisting of NH₄F·nHF, (NH₄)_{y}MF_{z}·mHF and a mixture of these and that is in liquid form, with an interhalogen compound,
wherein 1<n, 1≤y≤4, 2≤z≤8, 0.1≤m, and
M represents one selected from the group consisting of elements of group 1 to group 16 of periodic table and a mixed element of these elements.

2. A process for synthesizing a halogenated nitrogen represented by a formula of NFₓL₃₋ₓ, where L represents a halogen other than fluorine, and 1≤x≤3, the process comprising the step of:
(a) reacting an ammonium complex compound that is one selected from the group consisting of NH₄F·nHF, (NH₄)_{y}MF_{z}·mHF and a mixture of these and that is in liquid form, with a mixture of an interhalogen compound and F₂ gas,
wherein 1<n, 1≤y≤4, 2≤z≤8, 0.1≤m, and
M represents one selected from the group consisting of elements of group 1 to group 16 of periodic table and a mixed element of these elements.

3. A process according to claim 1 or 2, wherein a product of the step (a) is reacted with F₂ or HF.

4. A process according to claim 3, wherein the product of the step (a) is a halogenated nitrogen containing at least two kinds of halogens.

5. A process according to claim 4, wherein the at least two kinds of halogens are fluorine and at least one halogen other than fluorine.

6. A process according to claim 1 or 2, wherein a product of the step (a) is reacted with a reactant that is NH₃, NH₃ and HF, or NH₄F, thereby regenerating the ammonium complex compound.

7. A process according to claim 6, wherein the reaction of claim 6 is conducted by introducing the reactant into a reaction system of the step (a), while the step (a) is conducted.
